Europäisches Patentamt

European Patent Office

Office européen des brevets

(19)

(11) Publication number: **0 017 255**
**A2**

(12) **EUROPEAN PATENT APPLICATION**

(21) Application number: **80101891.2**

(22) Date of filing: **09.04.80**

(51) Int. Cl.³: **F 02 D 37/02**
**//F02D5/02, F02P5/04,**
**F02D21/08**

(30) Priority: **10.04.79 JP 43974/79**

(43) Date of publication of application:
**15.10.80 Bulletin 80/21**

(84) Designated Contracting States:
**DE FR GB**

(71) Applicant: **Hitachi, Ltd.**
**5-1, Marunouchi 1-chome**
**Chiyoda-ku Tokyo 100(JP)**

(72) Inventor: **Sato, Hideo**
**161 Ishinazakacho**
**Hitachi-shi(JP)**

(72) Inventor: **Sasayama, Takao**
**2712-34 Kanesawacho**
**Hitachi-shi(JP)**

(72) Inventor: **Miki, Masayuki**
**2643-1 Taibouchi**
**Katsukara Katsuta-shi(JP)**

(74) Representative: **Beetz, sen., Richard, Dipl.-Ing.**
**Patentanwälte Dipl.-Ing. R. Beetz sen. Dipl.-Ing. K.**
**Lamprecht;Dr. Ing. R. Beetz jr. et al,**
**Rechtsanwalt Dipl.-Phys. Dr. jur. U. Heidrich Dr.-Ing. W.**
**Timpe; Dipl.-Ing. J. Siegfried Dipl.-Chem. Dr.rer.nat.W.**
**Schmitt-Fumian Steinsdorfstrasse 10**
**D-8000 München 22(DE)**

(54) **Signal processing apparatus for obtaining control parameters in electronic engine control system.**

(57) In an electronic control system for controlling an internal combustion engine by using a computer, a pressure signal processing unit for obtaining an engine intake manifold pressure and the atmospheric pressure as control parameters in a form suited to be converted into corresponding digital values for use in the processing by the computer. The processing unit includes a pressure gauge (58) for producing a voltage output signal corresponding to the measured pressure, and a V-F conversion circuit (60, 61, 62 or 78, 80, 82, 84, 86) for converting the voltage output signal into a frequency signal having a frequency which corresponds to the voltage of the voltage output signal.

FIG. 2

- 1 -

# SIGNAL PROCESSING APPARATUS FOR OBTAINING CONTROL PARAMETERS IN ELECTRONIC ENGINE CONTROL SYSTEM

The present invention relates to a signal processing apparatus for obtaining control parameters used in an electronic control system for controlling operation of an internal combustion engine for a motor vehicle. In particular, the invention concerns such a signal processing apparatus in an electronic engine control system using a computer which is adapted to obtain the control parameters such as the atmospheric pressure, air intake manifold pressure of the engine or the like in a signal form suited for being subjected to analog-to-digital conversion before being applied to the processings by the computer.

The electronic engine control system incorporating a computer for controlling operation of the internal combustion engine for a motor vehicle attracts great attention. Various types of the control systems have been developed. A typical one of such systems is disclosed in a co-pending U.S. Patent Application Serial No. (not decided) in the name of Toshio Furuhashi, entitled "Electronic Type Engine Control Method and Apparatus", assigned to the same assignee and claiming the convention priority of Japanese Patent Applications No. 40901/79 filed on April 6, 1979 and No. 70067/79 filed on June 6, 1979. As is disclosed in the co-pending U.S. Application, the control system of this type makes use of the air intake or suction pressure in the engine intake manifold as a control parameter for controlling a fuel supply quantity, for example. Recently, the atmospheric pressure is also used as one of the control parameters in order to effect the fuel-air ratio control with a high accuracy in consideration of the fact that the density of intake air undergoes variation in dependence on the atmospheric pressure. The intake manifold pressure and the atmospheric pressure are usually measured by a diaphragm type pressure gauge having strain gauge elements electrically connected in a bridge circuit. The voltage output from the pressure gauge representative of the suction pressure in the intake manifold of engine or the atmospheric pressure is subjected to an analog-to-digital conversion so as to be processed by a micro-computer. One of the problems in such control systems is such that a relatively expensive A-D converter is required for obtaining a digital value through conversion from the analog voltage representing the suction pressure or the atmospheric pressure. Another disadvantage of the prior art control system resides in that the digital value obtained through A/D conversion often contains errors due to the possible noises derived from other electric apparatus such as ignition system, radio communication equipments or the like and superposed on the sampled instantaneous value of the analog voltage, resulting eventually in an unsatisfactory control. In order to evade the influence of the noises by using a hitherto known A/D converter, a filter specifically designed to eliminate the possible frequency components of the noise has to be additionally provided, which means that the manufacturing cost is correspondingly increased. Besides, an extreme difficulty will be encountered in eliminating the noise to a satisfactory degree even by resorting to the use of such filter.

Accordingly, a primary object of the invention is to provide a signal processing apparatus in an electronic engine control system for controlling an internal combustion engine of a motor vehicle by using a micro-computer which processing apparatus is capable of converting the control parameter such as the atmospheric pressure, suction pressure of the engine or the like into a signal adapted to be subjected to A/D conversion before being applied to the processing by the micro-computer and substantially free from the influences exerted onto the measured parameters by noise components derived from external noise sources upon A/D conversion thereof in a relatively inexpensive structure.

A second object of the invention is to provide an electronic engine control system for an internal combustion engine provided with the signal processing apparatus for the control parameters described above.

According to one aspect of the invention, there is provided for an electronic engine control system including a computer for an internal combustion engine, a signal processing apparatus for obtaining a pressure signal as a control parameter to be used for processing by the computer, the signal processing apparatus including a pressure gauge for detecting the pressure as the control parameter and generating a voltage signal of a voltage magnitude corresponding to the pressure, and a V-F conversion circuit for converting the voltage signal into a frequency signal having a frequency corresponding to the voltage magnitude.

According to another aspect of the invention, there is provided an electronic engine control system for controlling an internal combustion engine by using a computer, comprising a computer control circuit including a fuel-air ratio control, a pressure gauge for measuring the atmospheric pressure as a control parameter used in the computer control circuit, a voltage-frequency conversion circuit for converting an output voltage from the pressure gauge into a frequency signal having a frequency which corresponds to the output voltage, A/D converter means for detecting the frequency of the frequency signal to thereby convert the frequency signal into a digital value representing the frequency, and means for correcting by the digital value a calculated intake air quantity which is arithmetically determined from predetermined parameters including a pressure in a manifold of the engine, in order to determine the intake air quantity as a function of the atmospheric pressure, the intake air quantity being used for determining a control quantity for the fuel-air ratio control.

The present invention will now be described in detail by way of example with reference to the accompanying drawings, in which:

Fig. 1 is a sectional view of a throttle chamber of an internal combustion engine provided with a carburetor to which the invention is applied;

Fig. 2 is a block diagram showing a control system employed in the internal combustion engine of the type shown in Fig. 1;

Fig. 3 is a plan view showing an typical example of a pressure detector adapted to be used for measuring the intake manifold pressure or the atmospheric pressure;

Figs. 4A and 4B are sectional views taken along the line IV-IV in Fig. 2;

Fig. 5 is a block diagram showing a circuit of a pressure signal processing apparatus according to an exemplary embodiment of the invention;

Fig. 6 is a block diagram showing another exemplary embodiment of the pressure signal processing apparatus according to the invention;

Fig. 7 shows waveforms of signals produced at various points of the circuit shown in Fig. 6 to illustrate the operations thereof;

Fig. 8 is a circuit diagram of an A/D converter for converting the output signal from the pressure signal processing apparatus into a digital signal;

Figs. 9A and 9B are flow charts to illustrate a routine for determining an atmospheric pressure correcting factor from the output signal produced by the atmospheric pressure sensor;

Figs. 10A and 10B are to illustrate a routine for determining a corrected intake air quantity in accordance with the measured atmospheric pressure by a micro-computer;

Fig. 11 is a circuit diagram of a fuel-air ratio controlling circuit CABC;

Fig. 12 is a sectional view of a throttle chamber of a fuel injection type internal combustion engine to which the present invention is applied;

Fig. 13 is a block diagram of a control system adapted to be used in the internal combustion engine of the type shown in Fig. 12, and

Fig. 14 is a circuit diagram of an injection control device INJC in the control system shown in Fig. 13.

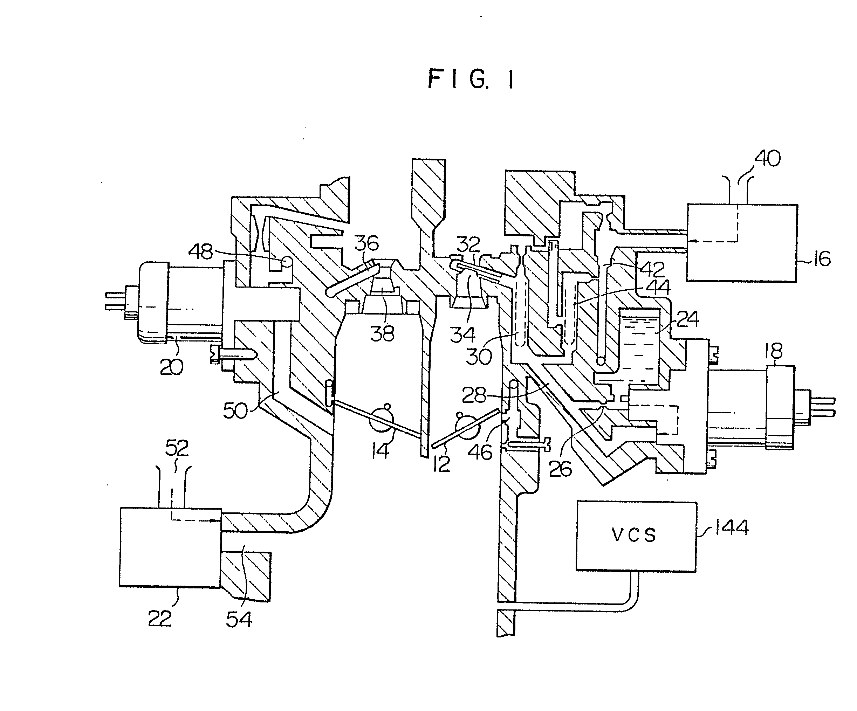

Now, the invention will be described in conjunction with an exemplary embodiment thereof which is applied to an internal combustion engine provided with a carburetor by referring to Figs. 1 to 11.

Fig. 1 is a sectional view showing a throttle chamber of a carburetor-type internal combustion engine. Various solenoid valves are provided around the throttle chamber for controlling a fuel quantity and a bypass air flow supplied to the throttle chamber, as will be described below.

Opening of a throttle valve 12 for a low speed operation is controlled by an acceleration pedal (not shown), whereby air flow supplied to individual cylinders of the engine from an air cleaner (not shown) is controlled. When the air flow passing through a Venturi-tube for the low speed operation is increased as the result of the increased opening of the throttle valve 12, a throttle valve 14 for a high speed operation is opened through a diaphragm device (not shown) in dependence on a negative pressure produced at the Venturi-tube for the low speed operation, resulting in a decreased air flow resistance which would otherwise be increased due to the increased intake air flow.

The quantity of air flow fed to the engine cylinders controlled in the manner described above is detected by a negative pressure sensor 144 and converted into a corresponding analog signal. In dependence on the analog signal thus produced as well as other signals available from other sensors which will be described hereinafter, the opening degrees of various solenoid valves 16, 18, 20 and 22 are controlled.

Next, description will be made on the control of the fuel supply. Fuel fed from a fuel tank through a conduit 24 is introduced into a conduit 28 through a main jet orifice 26. Additionally, the fuel in the conduit 24 is introduced to the conduit 28 through a main solenoid valve 18. Consequently, the fuel quantity fed to the conduit 28 is increased as the opening degree of the main solenoid valve 18 is increased. Fuel is then fed to a main emulsion tube 30 to be mixed with air and supplied to the Venturi 34 through a main nozzle 32. At the time when the throttle valve 14 for high speed operation is opened, fuel is additionally fed to a Venturi 38 through a nozzle 36 which is communicated to the main nozzle 32. On the other hand, a slow solenoid valve 16 is controlled in a manner described hereinafter simultaneously with the main solenoid valve 18, whereby air supplied from the air cleaner is introduced into a conduit 42 through an inlet port 40 upon opening of the slow or idle solenoid valve 16. Fuel introduced to the conduit 28 is also supplied to the conduit or passage 42 through a slow emulsion tube 44. Consequently, the quantity of fuel supplied to the conduit 42 is decreased as the quantity of air supplied through the slow solenoid valve 16 is increased. The mixture of air and fuel produced in the conduit 42 is then supplied to the throttle chamber through an opening 46 which is also referred to as the slow hole.

The fuel solenoid valve 20 serves to increase the fuel quantity for the engine starting and/or warming-up operations. Fuel introduced through a hole 48 communicating with the conduit 24 is fed to a conduit 50 communicating with the throttle chamber in dependence on the opening degree of the fuel solenoid valve 20.

The air solenoid valve 22 serves to control the air quantity supplied to the engine cylinders. To this end, the air solenoid valve 22 is supplied with air from the air cleaner through an opening 52, whereby air is introduced into a conduit 54 opening in the throttle chamber in a quantity corresponding to the opening degree of the air solenoid valve 22.

In this manner, the slow solenoid valve 16 cooperates with the main solenoid valve 18 to control the fuel-air ratio, while the fuel solenoid valve 20 functions to increase the fuel quantity. Further, the engine speed at the idling operation is controlled through cooperation of the slow solenoid valve 16, the main solenoid valve 18 and the air solenoid valve 22.

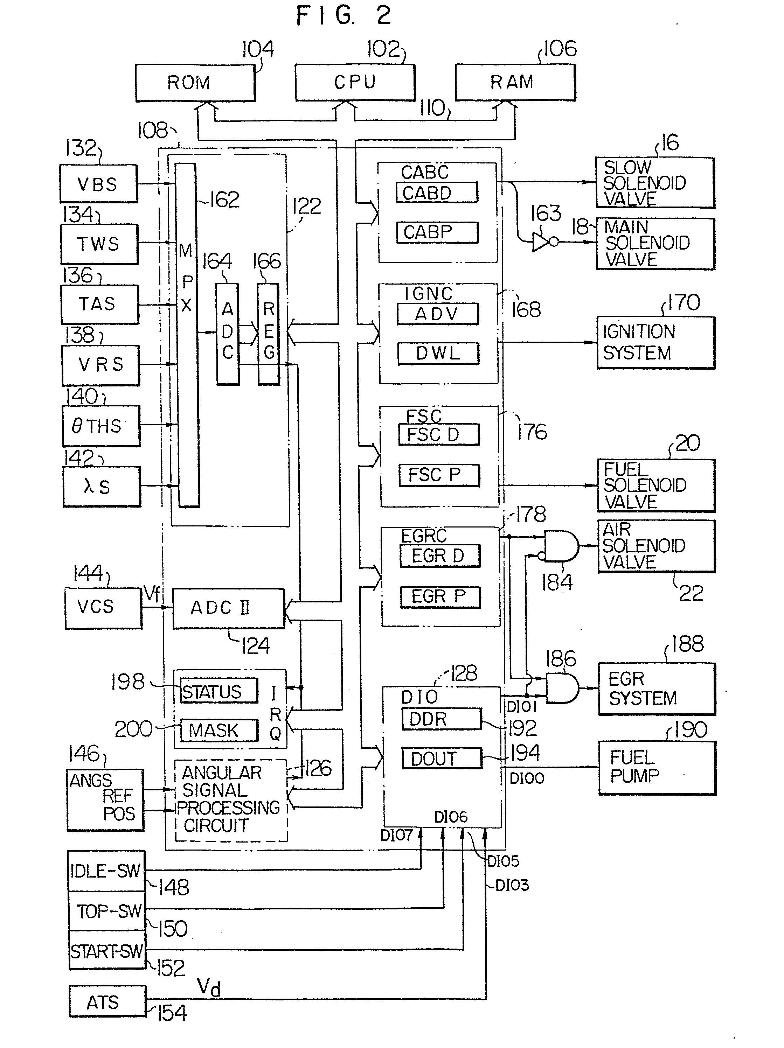

Next, description will be made on a control system for the internal combustion engine described above by referring to Fig. 2. As can be seen from this figure, the control system includes a central processing unit (hereinafter referred to as CPU) 102, a read-only memory (hereinafter referred to as ROM) 104, a random access memory (hereinafter referred to as RAM) 106, and an input/output interface circuit 108. The CPU 102 performs arithmetic operations for input data from the input/output circuit 108 in accordance with various programs stored in ROM 104 and feeds the results of arithmetic operations back to the input/output circuit 108. Temporal data storage as required for executing these arithmetic operations is accomplished by using the RAM 106. Various data transfers or exchanges among the CPU 102, ROM 104, RAM 106 and the input/output circuit 108 are realized through a bus line 110 composed of a data bus, a control bus and an address bus.

The input/output interface circuit 108 includes input means constituted by a first analog-to-digital converter 122 (hereinafter referred to as ADC1), a second analog-to-digital converter 124 (hereinafter referred to as ADCII), an angular signal processing circuit 126, and a discrete input/output circuit 128 (hereinafter referred to as DIO) for inputting or outputting a single-bit information.

The ADC1 includes a multiplexer 162 (hereinafter referred to as MPX) which has input terminals supplied with output signals from a battery voltage detecting sensor 132 (hereinafter referred to as VBS), a sensor 134 for detecting the temperature of cooling water (hereinafter referred to as TWS), an ambient temperature sensor 136 (hereinafter referred to as TAS), a regulated-voltage generator 138 (hereinafter referred to as VRS), a sensor 140 for detecting a throttle angle (hereinafter referred to as θ THS) and a λ-sensor 142 (hereinafter referred to as λ S). The multiplexer or MPX 162 selects one of the input signals to supply it to an analog-to-digital converter circuit 164 (hereinafter referred to as ADC). A digital signal output from the ADC 164 is held by a register 166 (hereinafter referred to as REG).

A negative pressure sensor 144 (hereinafter referred to as VCS) serves to detect the pressure prevailing in a manifold pipe (relative pressure with reference to the atmospheric pressure). The output quantity from the VCS 144 is converted into a corresponding digital signal through the A-D converter 124 to be subsequently utilized in the processing by the CPU 102.

An atmospheric pressure sensor 154 (hereinafter referred to as ATS) serves to measure the current atmospheric pressure. The output signal from the ATS 154 is input to the CPU 102 through the discrete input/output circuit or DIO 128 of the input/output interface 108 and converted into a corresponding digital value through a software technique described hereinafter to be used for subsequent processings.

An angle sensor 146 (hereinafter referred to as ANGS) is adapted to produce a signal representative of a standard or reference crank angle, e.g. of 180°C (this signal will be hereinafter termed REF signal) and a signal representative of a minute crank angle (e.g. 1°) which signal will be hereinafter referred to as the position or POS signal. Both of the signals REF and POS are applied to the angular signal processing circuit 126 to be shaped.

The discrete input/output circuit or DIO 128 has inputs connected to an idle switch 148 (hereinafter referred to as IDLE-SW), a top gear switch 150 (hereinafter referred to as TOP-SW) and a starter switch 152 (hereinafter referred to as START-ST).

In the foregoing, the control system for the internal combustion engine has been briefly described. For more details information, reference is to be made to the co-pending U.S. Patent Application recited hereinbefore. In the following, elucidation will be made on a fuel-air ratio control apparatus (hereinafter referred to as CABC) for controlling the fuel-air ratio by making use of the output signals from the VCS 144 and ATS 154.

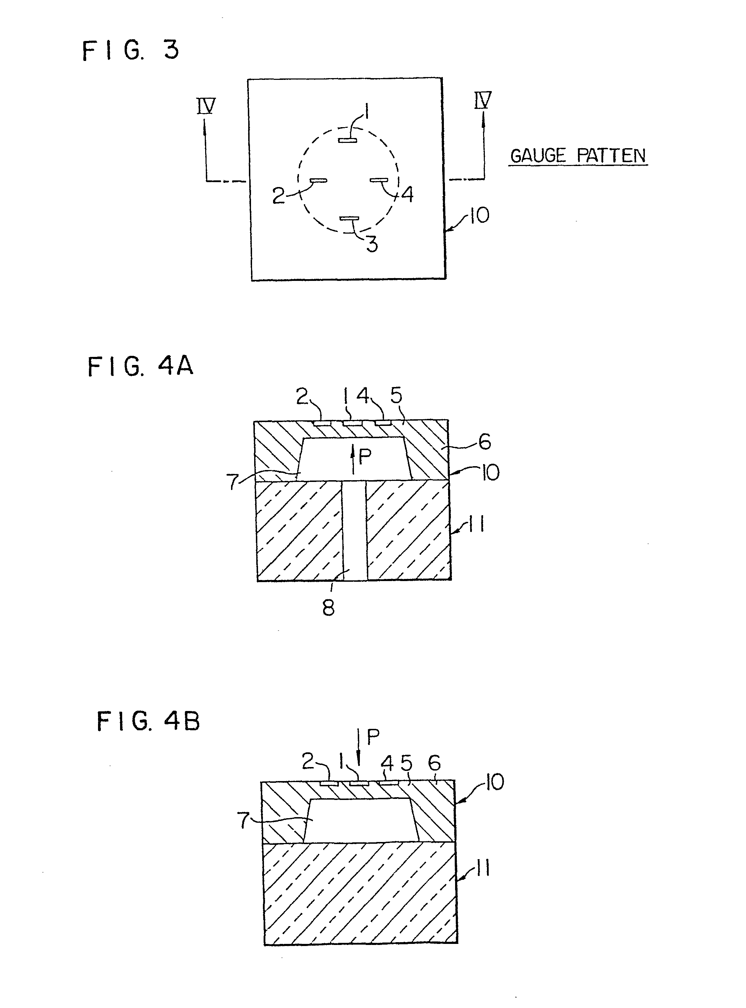

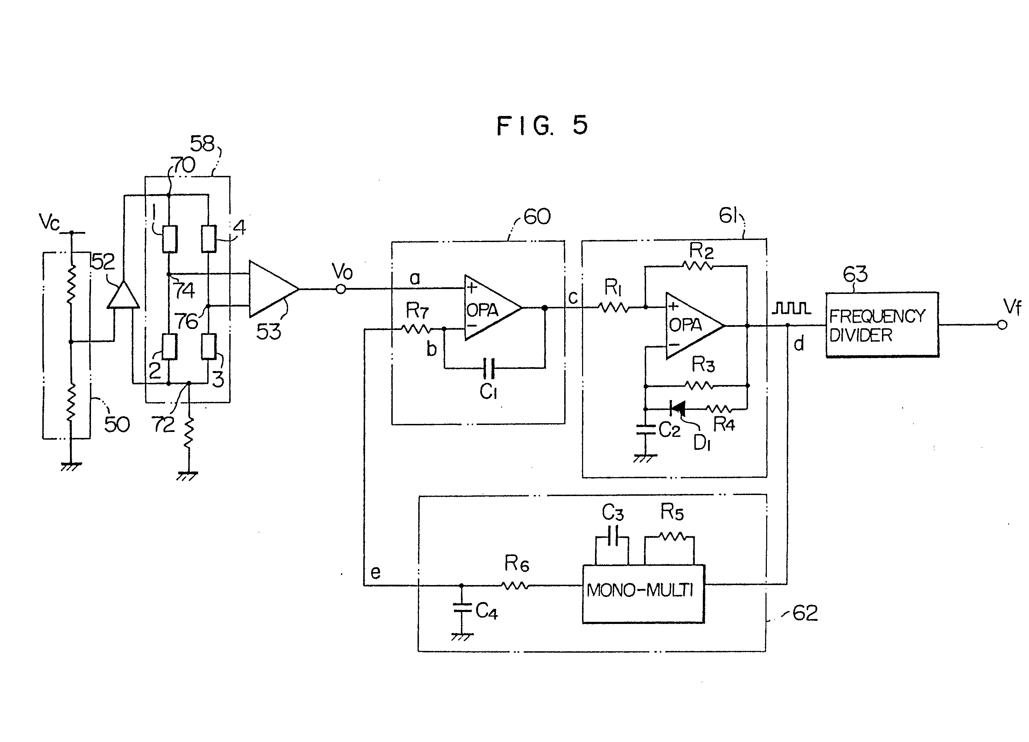

Each of the negative pressure sensor or VCS and the atmospheric pressure sensor or ATS is preferably composed of a silicon diaphragm 10 in which strain gauge elements 1, 2, 3 and 4 are formed through diffusion, as is illustrated in Figs. 3, 4A and 4B. In this connection, it should be noted that Fig. 4A shows in a sectional view a structure of a relative pressure type gauge for the VCS, while Fig. 4B shows in a sectional view a structure of an absolute pressure type gauge for the ATS. In any gauges, the diaphragm 10 of silicon includes a circular thin portion 5 formed in a central area for serving as a pressure sensitive part and a peripheral thick portion 6. The strain gauge elements 1, 2, 3 and 4 are implemented in the pressure sensitive portion 5 through diffusion, while the diaphragm 10 is secured to a glass base plate 11 through bonding at the peripheral thick portion 6, whereby a substantially frusto-conical space 7 is defined between the pressure sensitive portion 5 and the glass base plate 11 as enclosed by the peripheral thick wall portion 6. In the case of the gauge for VCS shown in Fig. 4A, a through-hole 8 is formed in the glass base plate so that pressure to be measured is applied to the inner face of the pressure sensitive portion 5 through the through-hole 8, while the external surface of the pressure sensitive portion 5 is impressed with the atmospheric pressure. As the consequence, the pressure sensitive portion 5 is subjected to a stress in dependence on the difference between the pressure to be measured and the atmospheric pressure. On the other hand, in the case of the gauge for ATS shown in Fig. 4B, the inner space 7 is completely isolated from the exterior so as to be substantially under vacuum. Consequently, the pressure sensitive portion 5 of the gauge for ATS is subjected to a stress of magnitude proportional to the absolute value of the atmospheric pressure to be measured as applied to the external surface of the pressure sensitive portion 5. As is shown in Fig. 3, the gauge elements 1, 2, 3 and 4 are located at the circular pressure sensitive portion in a coaxial array with equi-distance being maintained between the adjacent gauge elements. More specifically, a set of diametrically opposed gauge elements 1 and 3 are disposed in a tangential direction relative to a circle coaxial to the one defining the pressure sensitive area 5, while the other set of the diametrically opposed gauge elements 2 and 4 are formed to extend radially toward each other, as can be seen from Fig. 3. Each of the gauge elements 1, 2, 3 and 4 is formed integrally in the diaphragm 10 through diffusion in a linear configuration. Further, it is to be noted that these gauge elements are electrically connected together in a form of a bridge circuit shown in Fig. 5 through electrically conductive regions (not shown) also formed in the diaphragm 10 through diffusion.

Next, a signal processing circuit for processing the output signals from the VCS and ATS will be described by referring to Fig. 5. The signal processing circuit is intended for processing the output voltage from the pressure gauge sensor having the gauge elements connected in a bridge circuit thereby producing a signal suited to be subjected to a subsequent analog-to-digital (A/D) conversion and may be regarded as a kind of the voltage-frequency (V-F) conversion circuit in this sense. Referring to Fig. 5, the pressure gauge circuit generally denoted by numeral 58 and constituted by the gauge elements 1, 2, 3 and 4 connected in the bridge form has input terminals 70 and 72 connected to a constant voltage DC power source 50 through a differential amplifier 52 so that the pressure gauge circuit is excited by a constant current. When the pressure sensitive portion 5 of the silicon diaphragm is deformed under a stress corresponding to the pressure to be measured, the individual gauge elements will also undergo corresponding deformations, resulting in corresponding variations in the electrical resistance value of the individual gauge elements, whereby a DC output voltage representative of the pressure to be measured is produced across the output terminals 74 and 76 of the bridge circuit. The output voltage thus derived is then amplified through the differential amplifier 53 to an output voltage $V_o$ and then supplied to the signal processing circuit which includes an integrator 60, a voltage-frequency converter 61 (hereinafter referred to as VFC) and a frequency-voltage converter 62 (hereinafter referred to as FVC).

As mentioned hereinbefore, the signal processing circuit is a kind of voltage-frequency conversion circuit through which an input voltage $V_o$ applied to the input terminal a is converted into a pulse signal produced at an output terminal d and having a pulse repetition rate proportional to the input voltage $V_o$, as is illustrated in Fig. 5. More specifically, the V-F conversion circuit is balanced at such a state that the DC voltage $V_o$ applied to the input terminal a of the integrator 60 composed of operational amplifier OPA and $C_1R_7$ circuit is at the same potential as that of the feedback voltage applied to the other input terminal b thereof, whereby the VFC 61 composed of operational amplifier OPA, diode D, resistors $R_2$, $R_3$, $R_4$ and capacitor C produces a pulse signal $V_d$ whose frequency is determined definitely depending on the voltage level of the output $V_c$ of the integrator 60.

The pulse signal $V_d$ is fed back through the FVC 62 composed of a mono-multivibrator and a $C_4R_6$-circuitry to the integrator 60. In the steady state, the feedback voltage $V_e$ is balanced with the input voltage $V_o$.

Assuming now that a change in the feedback voltage $V_e$ takes place due to variation in the input voltage $V_o$ describable to a variation in the pressure applied to the pressure gauge or due to noise in the circuit, the potential at the output terminal $\underline{c}$ will be varied in dependence on the integrated quantity of the voltage difference between $V_o$ and $V_e$ as produced through $C_1R_7$, which in turn results in a corresponding variation in the frequency of the output pulse signal $V_d$ from the VFC 61. In this way, the frequency of the pulse signal $V_d$ will constantly follow the input voltage $V_o$ and take a value proportional thereto.

Each of the integrator 60, VFC 61 and the FVC 62 constituting the signal processing circuit may fundamentally be implemented in substnatially similar circuit configuration as those known in the art. However, in order to assure a wide input voltage range for the VFC 61, circuit arrangement is adopted such that the effective resistance of the feedback circuit thereof is varied in dependence on the signal polarity. More specifically, the resistance values of $R_3$ and $R_4$ are so selected that $R_3 >> R_4$, while a diode D is connected in series to the register $R_4$. With the circuit arrangement, the effective resistance for the voltage of a polarity at which the capacitor C is charged is substantially equal to $R_4$. On the other hand, for the signal of the polarity at which the capacitor C is caused to discharge, the effective resistance becomes substantially equal to $R_3$. In this manner, a period of the output pulse signal depends essentially solely on the discharge characteristic, whereby the VFC 61 is capable of operating with a high accuracy for a wide range of input voltages. The output pulse signal $V_d$ may be subjected to frequency division and waveform shaping through a frequency divider 63, if necessary, thereby to derive a rectangular pulse signal $V_f$ of a lower frequency.

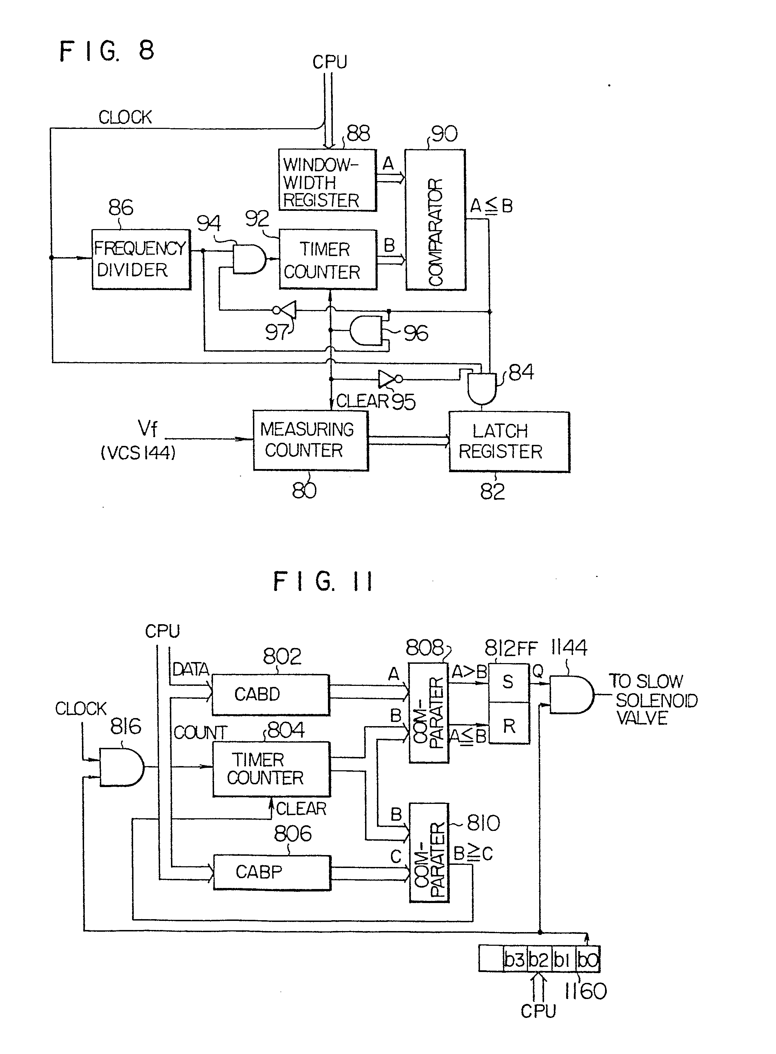

Referring again to Fig. 2, the pulse signal $V_f$ derived from the VCS 144 in the manner described above is converted through an analog-to-digital converter 124 (hereinafter referred to as ADC) into a digital signal corresponding to the frequency of the signal $V_f$. A typical example of ADC 124 is shown in Fig. 8. The output pulse signal $V_f$ derived from the VCS 144 is supplied to a measuring counter 80. Now, it is assumed that the measuring counter 80 and a timer counter 92 are simultaneously cleared by a clear signal, as the result of which the contents of these counters are both "0". The measuring counter 80 then counts the pulses $V_f$, while the timer count 92 counts the pulses supplied thereto through an AND gate 94 from a frequency divider 86 to which a clock pulse signal is supplied from the CPU. A window-width register 88 stores therein a numerical value "A" which corresponds to a predtermined time duration Tvc supplied from the CPU. The contents "B" of the timer counter is compared with the value "A" through a comparator 90. When A > B, the output from the comparator 90 is logic "0". It should be noted that when the timer counter 92 is cleared, resulting in that B = 0, then the output from the comparator 90 is logic "0" which is inverted through an inverter 97, whereby logic "1" signal is applied to the AND gate 94 to thereby allow the output pulses from the frequency divider 86 to be applied to the timer counter 92. When the count value in the timer counter 92 is progressively increased until B = A, the output from the comparator 90 is then logic "1", which results in that the AND gate 94 is blocked thereby to inhibit the output pulses of the frequency divider 86 from being applied to the timer counter 92. The output "1" from the comparator 90 is applied to a first input terminal of the AND gate 84 having a second input terminal to which the inverted output or "1" signal from the inverter 95 is applied. Consequently, the signal "1" output from the AND gate 84 in response to the next pulse of the clock signal causes a latch register 82 to store therein the current contents of the measuring counter 80. Thus, the contents stored in the latch register 82 corresponds to the number of pulses of the pulse signal $V_f$ occurring during the predetermined time duration Tvc, i.e. the numerical value corresponding to the manifold pressure (relative pressure with reference to the atmospheric pressure) measured by the pressure gauge constituting the VCS. Both of the timer counter 92 and the measuring counter 80 are cleared by the clear signal produced by the AND gate 96 in response to a succeeding pulse output from the frequency divider 86, whereupon the one-cycle operation of the ADC 124 has been completed to be ready for the succeeding operation cycle being initiated again. In this manner, the ADC 124 determines repeatedly the digital values of the output pulse frequency $(V_f)$ representative of the corresponding pressures as measured by the pressure gauge of the VCS 144 cyclically at the predetermined period Tvc, thereby to update the contents placed in the latch register 82. Accordingly, the contents in the latch register 82 are renewed in each operation cycle by the up-to-date value of the pressure as detected by the VCS 144.

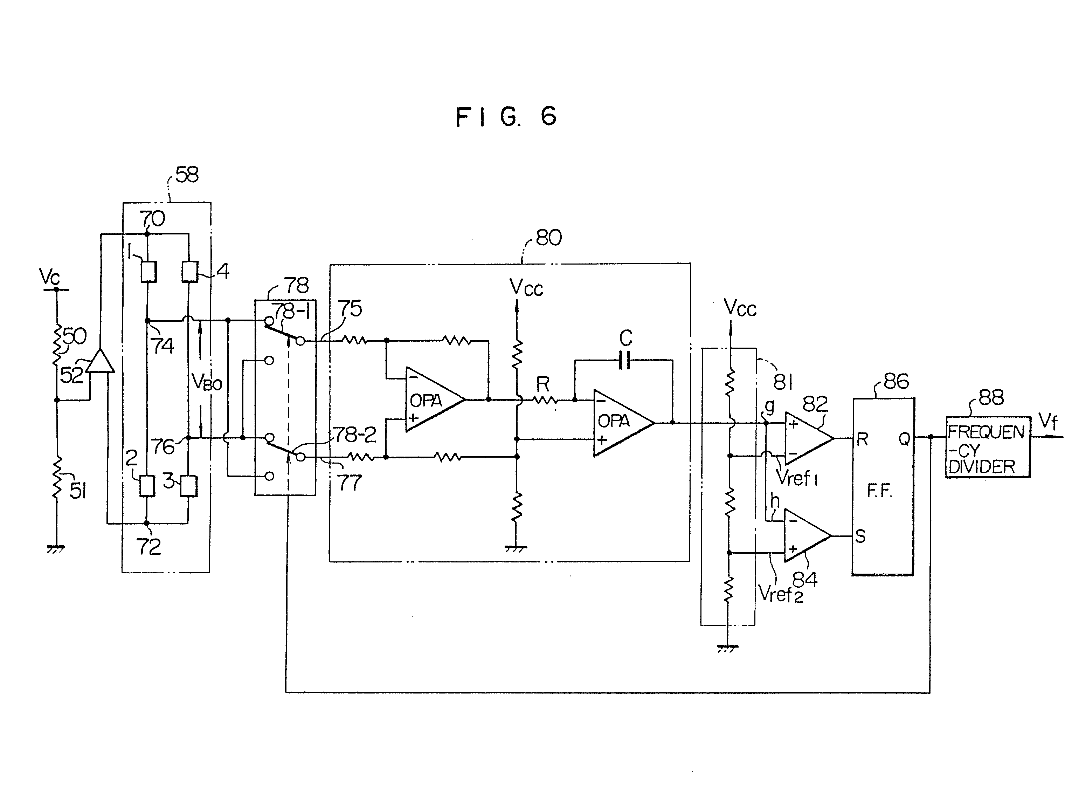

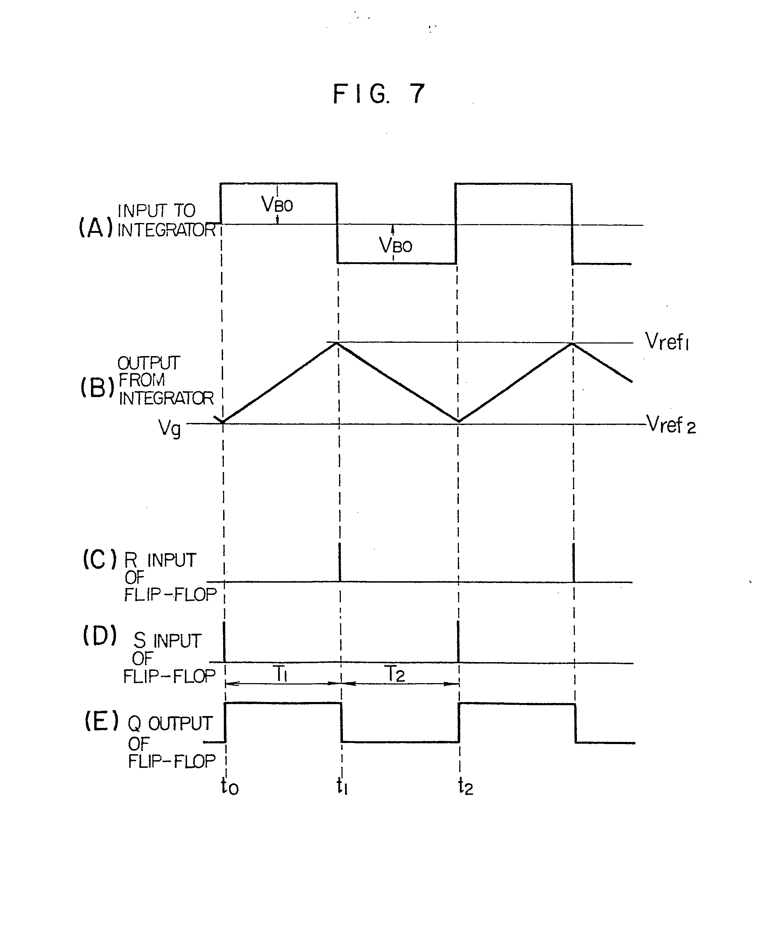

Fig. 6 shows another exemplary embodiment of the signal processing circuit. In the case of the signal processing circuit shown in Fig. 6, the output voltage $V_{BO}$ from the pressure gauge is supplied to an integrator 80 composed of an operational amplifier and a CR-circuitry through an analog switch circuit 78 which comprises two analog switches 78-1 and 78-2 connected to the output terminals 74 and 76 of the bridge circuit 58 and adapted to be actuated by Q-output of an RS flip-flop 86 as will be described hereinafter. More specifically, when the Q-output of the RS flip-flop 86 is logic "1", the output terminals 74 and 76 of the bridge circuit 58 are connected to the input terminals 77 and 75, respectively. Accordingly, the output voltage $V_{BO}$ of the bridge circuit 58 applied to the input terminal of the integrator 80 is inverted in respect of its polarity with the output from the flip-flop 86, as is illustrated in Fig. 7 at (A). Assuming now that the Q-output from the RS flip-flop 86 is logic "1" (refer to Fig. 7 at (E)) at a time point $t_0$ and thus the switches 78-1 and 78-2 are at the polarity as shown, the output voltage $V_{BO}$ from the bridge circuit is applied to the input terminal of the integrator 80 at the polarity shown in Fig. 7 at (A), resulting in that the integrated output voltage $V_g$ of the integrator 80 will take a waveform rising progressively from the time point $t_0$, as is shown in Fig. 7 at (B). When the output voltage $V_g$ attained a first reference voltage $V_{refl}$ set by a potentiometer 81 at a time $t_1$, an output "1" is produced from a comparator 82 and applied to a reset input R of the flip-flop 86 (Fig. 7 at (C)), whereby the Q-output from the flip-flop 86 is reset to "0" (Fig. 7 at (E)). As the consequence, the analog switch circuit 80 is actuated so that the polarity of the voltage output from the bridge circuit 58 and supplied to the integrator 80 is inverted at the time point $t_1$, resulting in that the integrated output voltage Vg from the integrator 80 is progressively decreased from the time point

$t_1$ (Fig. 7 at (B)). When the integrated output voltage $V_g$ decreases to a second reference potential $V_{ref2}$ set by the potentiometer 81 at a time point $t_2$, the output from the comparator 84 is then logic "1" which is applied to a set terminal S of the flip-flop 86 (Fig. 7 at (D)). Consequently, the Q-output from the flip-flop 86 becomes logic "1", resulting in that the polarity of the input voltage $V_{BO}$ to the integrator 80 is inverted again. In this way, a pulse signal shown in Fig. 7 at (E) is produced from the Q-output terminal of the flip-flop 86. In Fig. 7, $T_1$ represents a time duration in which the integrated output voltage $V_g$ from the integrator 80 is increased from the second reference potential level $V_{ref2}$ to the first level $V_{ref1}$ (this duration is referred to as ON-duty duration), while $T_2$ represents a time duration which the integrated output voltage $V_g$ is decreased from the first reference level $V_{ref1}$ to the second reference $V_{ref2}$ (this duration is referred to as OFF-duty duration). Since the integration time constant of the integrator 80 is fixedly determined by the associated CR-circuitry (Fig. 6), the ON-duty duration $T_1$ is equal to $T_2$, the actual value of which is substantially inversely proportional to the magnitude of the output voltage $V_{BO}$ from the bridge circuit. In other words, the frequency of the pulse signal produced from the Q-output terminal of the flip-flop 86 is proportional to the output voltage $V_{BO}$ from the bridge circuit, while the ON-duty duration $T_1$ is in inverse proportion to the same voltage $V_{BO}$. It will be noted that the Q-output frequency of the flip-flop 86 may be stepped down through a frequency divider 88 to thereby derive a pulse signal of a frequency $V_f$ suited to the subsequent processing, if desired, as in the case of the processing circuit shown in Fig. 5. It goes without saying that the frequency of the divided pulse signal $V_f$ is proportional to the output voltage $V_{BO}$ from the gauge bridge circuit 58, while the ON-duty duration $T_1$ is in inverse proportion to the voltage $V_{BO}$. When the bridge circuit 58 is destined to be used for the VCS 144, the pulse signal $V_f$ is processed through A/D conversion (124) such as shown in Fig. 8, whereby a digital value corresponding to the frequency of the pulse signal $V_f$ which is proportional to the magnitude of the output voltage $V_{BO}$ from the bridge circuit is stored in the latch register 82.

Before entering into description of the processing of pulse signal derived from the ATS 154 and representing the atmospheric pressure, elucidation will be made of the manner in which the measured value of the atmospheric pressure is utilized in controlling the fuel-air ratio. Referring again to Fig. 2, the fuel-air ratio controller (hereinafter referred to as CABC) is adapted to control the slow solenoid valve 16 and the main solenoid valve 18. As described hereinbefore, when the slow solenoid valve 16 is opened, the air flow quantity supplied to the engine is increased, while the fuel supply quantity is reduced. On the other hand, when the main solenoid valve 18 is opened, the fuel supply quantity is increased. Accordingly, when the solenoid for slow valve 16 is activated (the slow valve is closed) by the turn-on output ON from the CABC, the solenoid from main valve 18 is deenergized (the main valve is opened) by the inverted signal from an inverter 163, whereby the fuel supply quantity is increased relative to the air flow quantity. To the contrary, when the output from the CABC is OFF, the air flow quantity is increased as compared with the fuel supply quantity. In general, the fuel-air ratio is determined on the basis of the ratio between the time durations $T_{ON}$ and $T_{OFF}$ of the ON and OFF outputs of CABC or the ratio between $T_{ON}$ and $T_{ON} + T_{OFF} = T_{ON+OFF}$, i.e. the ON-duty of the output pulse signal from the CABC. Since the optimum value of the ON-duty will vary in dependence on various parameters of engine operations as described hereinafter, the optimum ON-duty value has to be updated in correspondence to variations in these parameters. To this end, the length of time duration of $T_{ON+OFF}$ is set at constant, while the time duration $T_{ON}$ in which the output from CABC is ON is made use of as a signal representing the ON-duty. The fuel-air ratio is maintained at a value corresponding to the current time duration $T_{ON}$ for a time period of $T_{ON+OFF}$ of CABC. At the succeeding operating period $T_{ON+OFF}$ of CABC, the value of ON-duty $T_{ON}$ as used may be varied in

- 2L -

accordance with the variations in the aforementioned parameters and accordingly the fuel-air ratio may be changed.  The term "ON-duty" is used hereinafter to indicate the ON-time duration $T_{ON}$ described above.

In the control system shown in Fig. 2, a desired value of the fuel supply quantity which can assure an optimum fuel-air ratio is arithmetically determined on the basis of various parameters including the atmospheric pressure.  Then, the value to be set for the ON-duty of CABC is established on the basis of the desired value.  The CABC is operated in accordance with the value of the ON-duty as established.  The desired value Ti of the fuel supply quantity is determined from the following expressions (1), (2) and (3).

$$Q_{AM} = kp \cdot \frac{Pm}{Ta} \cdot \varepsilon \qquad \ldots\ldots (1)$$

$$Tp = k \frac{Q_{AM}}{N} \qquad \ldots\ldots (2)$$

$$Ti = \alpha \cdot Tp(1 + \Sigma K) \qquad \ldots\ldots (3)$$

where $Q_{AM}$: intake air mass,

$P_m$: pressure in manifold as measured by VCS,

Ta: temperature of intake air,

kp: correcting factor for the atmospheric pressure determined as a function thereof,

$\varepsilon$: charging efficiency determined as a function of $P_m$ and the revolution number of engine,

Tp: basic fuel supply quantity,

N: number of revolution of the engine,

k: a constant determined by the mechanism of the fuel supply system,

d: coefficient determined as a function of $O_2$-contents in the exhaust gas (derived from the output signal of $\lambda$-sensor 142 shown in Fig. 2), and

K: coefficient determined as a function of the temperature of engine cooling water and the temperature of intake air.

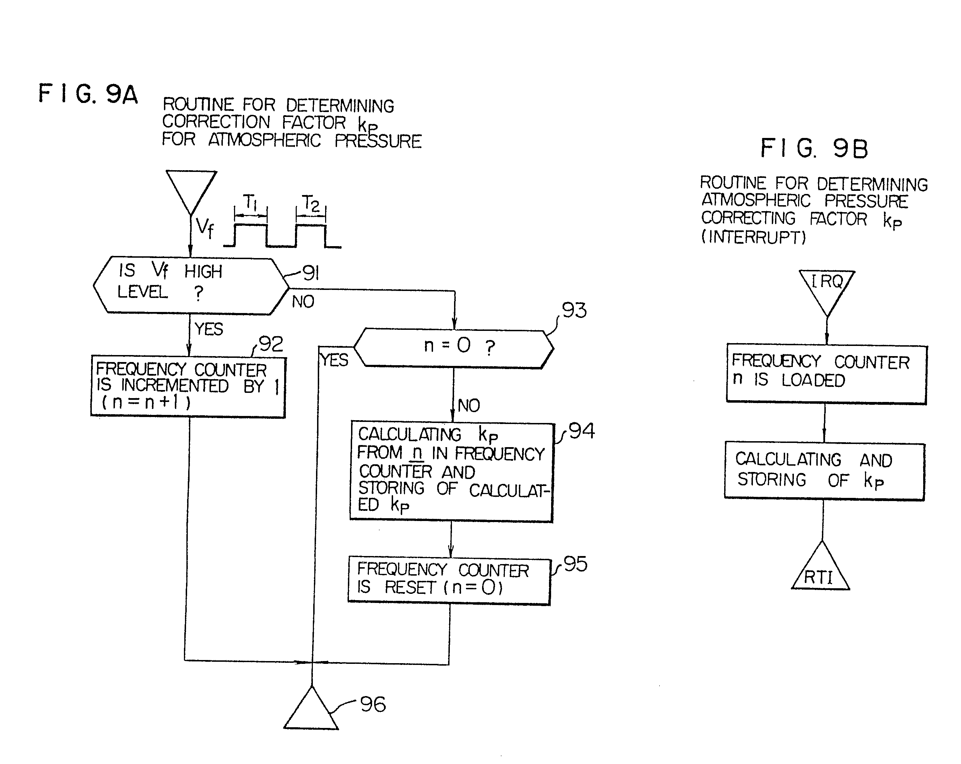

As can be seen from the above equations, it is necessary to determined the atmospheric pressure correcting factor kp as a function of the atmospheric pressure for calculating the mass of intake air. Fig. 9A shows in a flow chart a routine for determining the factor or coefficient kp by the CPU. This routine is so programmed as to obtain a time length of the ON-duty $T_1$ of the output pulse signal $V_f$ from the signal processing circuit which is in inverse proportion to the output voltage $V_{BO}$ from the bridge circuit as described hereinbefore in conjunction with Fig. 5 or Fig. 6 and then calculate and store the value of kp which corresponds to the time length of the ON-duty duration $T_1$. At a step 91, it is decided whether the signal $V_f$ is at a high level or not. If negative or "NO", then the contents $\underline{n}$ in a frequency counter provided in CPU is read out to decide whether n = 0 at a step 93. When n = 0, the program proceeds to the step 96. On the other hand, when n ≠ 0, the program proceeds to a step 95 after execution of a step 94 described hereinafter. At the step 95, the frequency counter is reset, i.e. n = 0. Thereafter, the program proceeds to the step 91. At any case, the fact that the signal $V_f$ is not at high level indicates that the signal $V_f$ is in the OFF-duty duration $T_2$, during which the contents n in the frequency counter is reset to zero. When the signal $V_f$ becomes at high level, the contents n (= 0) in the frequency counter is incremented by "1" to n + 1 = 1 at the step 92 and thereafter the step 96 is reached. When the signal $V_f$ is still at high level, the program proceeds again to the step 92 where the contents in the frequency counter is incremented by 1 to n + 1 (i.e. equal to 2). In this manner, during the ON-duty duration $T_1$ in which the signal $V_f$ is at high level, the step 92 is repeatedly executed, whereby the contents of the frequency counter is successively incremented by "1" in synchronous timing with the clock pulse signal used for controlling the routine. At the first step 91 after the signal $V_f$ has been in the OFF-duty duration, it is decided that the signal $V_f$ is not at high level. At the step 93, it is decided that n ≠ 0 and the routine proceeds to the step 94 where the contents "n" of the frequency counter is read out. The contents "n" is a value which is in proportion to the length of the ON-duty duration $T_1$ and in inverse proportion to the atmospheric pressure. Since the coefficient kp is a function of the atmospheric pressure, the coefficient can be determined as a value proportional to $\underline{n}$ through calculation and stored in RAM 106 at a predetermined address. In this way, the routine described above is programmed so that the steps 91 to 95 are repeatedly executed during a period which at least corresponds to one period of the signal $V_f$ (i.e. $T_1 + T_2$), whereby the value of kp corresponding to the current atmospheric pressure is written in RAM 106 at the predetermed address. By the way, this routine is executed periodically at a predetermined relatively long time interval to update the value of kp in accordance with variation in the atmospheric pressure.

Fig. 9B shows in a flow chart a calculation routine for kp in the case where the output signal from the ATS 154 is processed by the signal processing circuit such as the one shown in Fig. 8. In this case, a digital value corresponding to the atmospheric pressure is ordinarily stored in the latch register 82. Accordingly, for calculating the coefficient kp, the digital value is read out from the latch register 82 and the calculated value of kp is stored in the RAM 106 at a location of a predetermined address. This routine is carried out with an interrupt command issued in asynchronism with the execution of the routine for calculating the expressions (1), (2) and (3) described below.

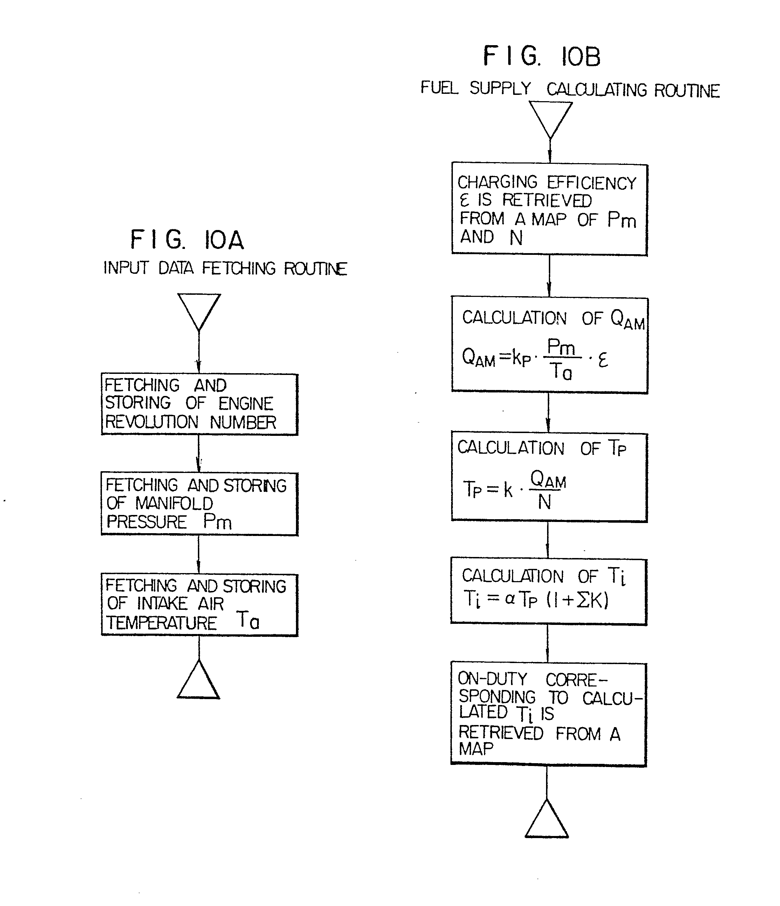

Next, calculation routines in accordance with the expressions (1), (2) and (3) will be described by referring to Figs. 10A and 10B. Through the routine illustrated in Fig. 10A, values of the number N of revolutions of the engine, the manifold pressure Pm and the temperature Ta of intake air are read out from respective registers which are provided, respectively, in the signal processing circuit 126 connected to ANGS 146, ADC II 124 connected to VCS 144 and the ADC I 122 connected to TAS 136. The registor 82 shown in Fig. 8 is the one which stores therein the value of manifold pressure Pm. The values thus read out are written in the RAM at the allotted addresses, respectively.

Next, a calculation routine illustrated in Fig. 10B is executed by making use of the various data written in the RAM as described above. At first, the charging efficiency ε is determined on the basis of the manifold pressure Pm and the engine revolution number N. To this end, a map indicating values of ε corresponding to various values of Pm and N is provided in the ROM 104 so that the value of ε corresponding to the manifold pressure Pm and the revolution number N read out from the RAM can be determined from the map. Subsequently, calculations are made successively in accordance with the expressions (1), (2) and (3) to determine the value of Ti. A map including predetermined values of ON-duty of CABC of the control system shown in Fig. 2 which are experimentally previously determined in correspondence to various values of Ti is provided in the ROM 104. From this map, the value of ON-duty of CABC corresponding to the calculated value of $T_i$ is determined and written in the RAM at a predetermined address, whereupon the routine shown in Fig. 10B is terminated. The routine illustrated in Figs. 10A and 10B are periodically executed at a predetermined time interval to thereby update the value of ON-duty of CABC in accordance with variations in the various parameters described above.

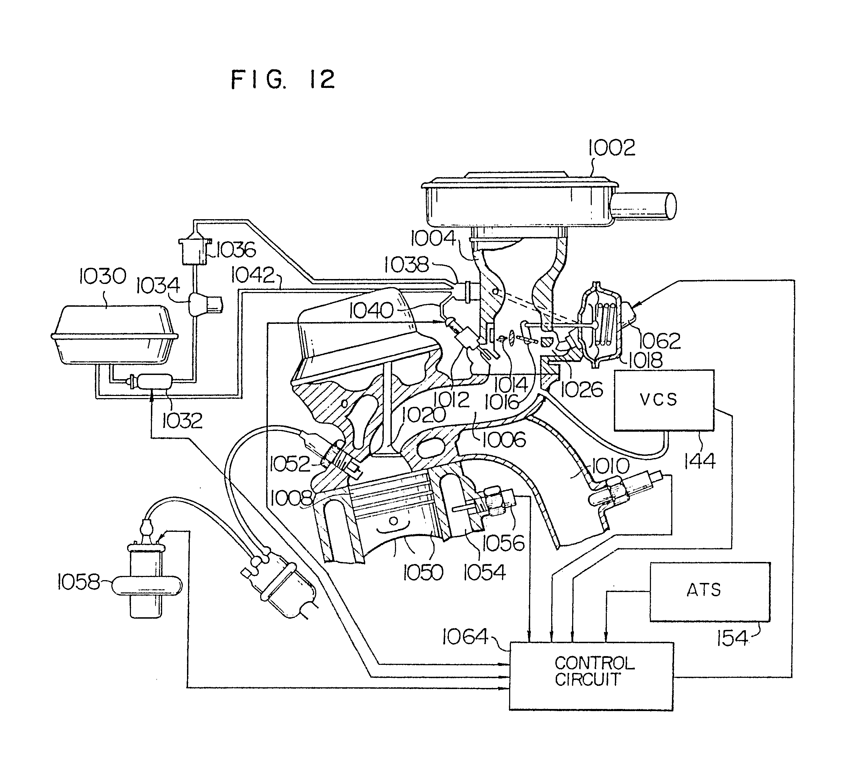

Next, operation of the CABC will be described by referring to Figs. 11 and 12. Operation of the CABC is started in response to the signal b0 of logic "1" produced from a register 1160 in response to a command signal supplied from the CPU at a predetermined period and is terminated at the time when the signal b0 becomes logic "0". For more detailed information in this respect, reference should be made to the co-pending U.S. Applications recited hereinbefore. A register CABD 802 is provided to place therein the value of ON-duty of CABC read out from the RAM. The value of ON-duty represents the time duration $T_{ON}$ in which the output from CABC is turned on in the predetermined period $T_{ON+OFF}$. A register CABP 806 serves to store the numerical value corresponding to the predetermined period $T_{ON+OFF}$. When the signal b0 of logic "1" is produced, the clock signal is supplied through an AND gate 816 to a timer counter 804 to be counted. The contents B of the counter 804 is compared with the the contents A of the register CABP through a comparator 808, while the contents B is compared with the contents C of the register CABP through a comparator 810. When $B < A$, the signal applied to the set terminal of a flip-flop 812 is logic "1", as the result of which output signal of logic "1" is produced from the terminal Q of the flip-flop and supplied through an AND gate 1144 to CABC as the turn-on signal. When the contents B has attained A (i.e. $B = A$), the output signal of the comparator 808 as applied to a reset terminal of the flip-flop 812 becomes logic "1", resulting in the Q-output of logic "0" from the flip-flop 812. The counting operation is further continued. When the contents B of the counter has attained the value C in the register CABP, output signal of logic "1" is produced from the comparator 810, whereby the timer counter 804 is reset to zero. In this manner, the CABC circuit produces ON-output during a time duration $T_{ON}$ in the period $T_{ON+OFF}$ which duration corresponds to the optimum value of the ON-duty to thereby control the fuel-air ratio at an optimum value.

Next, another exemplary embodiment of the invention applied to an internal combustion engine of a fuel injection type will be described by referring to Figs. 12 to 15.

Referring to Fig. 12 which shows a control apparatus for the whole system of the fuel injection type internal combustion engine, suction air is supplied to engine cylinders 1008 from an air cleaner 1002 through a throttle chamber and an air intake conduit or manifold 1006. Combustion product gas is exhausted to the atmosphere from the cylinders 1008 through an exhaust conduit 1010.

There is provided in the throttle chamber 1004 an injector 1012 for fuel injection. The fuel injected from the injector 1012 is atomized in an air passage provided within the throttle chamber 1004 and mixed air to thereby form a fuel-air mixture which is then supplied to combustion chambers of the engine cylinders 1008 through the intake manifold 1006 and associated air suction valves 1020.

Throttle valves 1014 and 1016 are provided in the vicinity of the outlet orifice of the injector 1012 at the upstream side thereof. The throttle valve 1014 is mechanically interlocked with an acceleration pedal so as to be operated by a driver. On the other hand, the throttle valve 1016 is arranged to be controlled by a diaphragm chamber 1018 in such manner that the valve 1016 is fully closed in a range of a small air flow, while the throttle valve 1016 is increasingly opened as a function of a negative pressure in the diaphragm chamber 1018 which pressure in turn is increased as the air flow is increased, thereby to prevent resistance to the air flow from being increased.

The fuel is supplied to the fuel injector 1012 from a fuel tank 1030 through a fuel pump 1032, a fuel damper 1034, a filter 1036 and a fuel pressure regulator 1038. The fuel pressure regulator 1038 serves to control the pressure of fuel supplied therefrom to the injector 1012 through a pipe 1040 so that difference between the pressure of fuel supplied to the injector 1012 and the pressure prevailing in the suction manifold 1006 into which the fuel is injected is maintained constantly at a predetermined value. Reference numeral 1042 denotes a feed-back pipe through which fuel in excess is returned to the fuel tank 1030 from the fuel pressure regulator 1038.

The fuel-air mixture sucked through the suction valve 1020 is compressed by a piston 1050 within the cylinder and undergoes combustion as ignited by a spark produced at a spark plug 1052. The cylinder 1008 is cooled by cooling water the temperature of which is measured by a water temperature sensor 1056. The output quantity from the sensor 1056 is utilized as a control parameter representing the temperature of the engine. The spark plug 1052 is supplied with a high voltage pulse from an ignition coil 1058 in a proper ignition timing.

A crank angle sensor (not shown) is provided in combination with a crank shaft (not shown) of the engine for producing a reference angle signal for every reference crank angle and a position signal for every predetermined angle (e.g. 0.5°) of rotation of the engine.

The electrical signal output from the crank angle sensor, the output signal 1056A from the water temperature sensor 1056, and the output signals from the negative pressure sensor 144 and the atmospheric pressure sensor 154 are applied to the input of a control circuit 1064 which is constituted by a microcomputer and associated circuit to be arithmetically processed, whereby the injector 1012 and the ignition coil 1058 are driven by the signals derived from the output of the control circuit 1064.

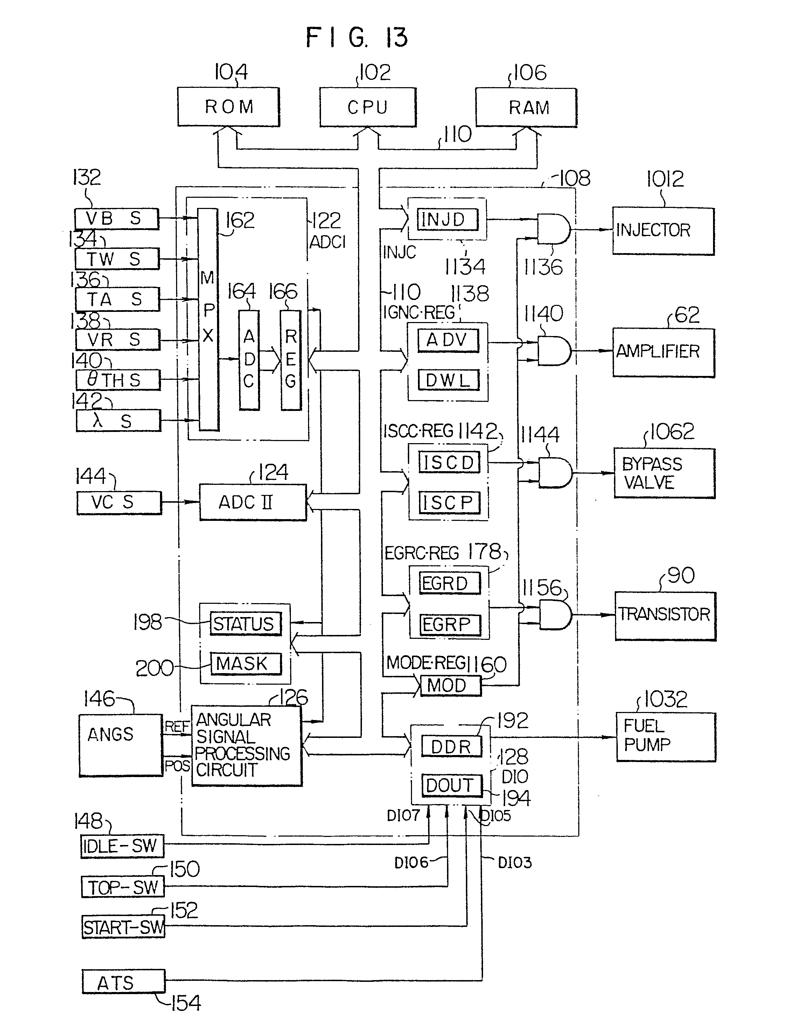

Fig. 13 shows a control system for the fuel injection type internal combustion engine described above in which those components the same as or equivalent to those shown in Fig. 2 are denoted by the same reference symbols. Fuel-air ratio control through the control system shown in Fig. 13 will now be described. The output signals from the VCS 144 and ATS 154 are processed in a similar manner as described hereinbefore in conjunction with the control system shown in Fig. 2 except that a fuel injection time Ti for one cycle of the individual cylinders which corresponds to the optimum fuel-air ratio is calculated and the corresponding digital value is stored in the RAM 106 in the routine for determining the fuel supply quantity described hereinbefore in conjunction with Fig. 10B. On the basis of the thus determined value of Ti, the fuel injection quantity is controlled by the INJC 1134.

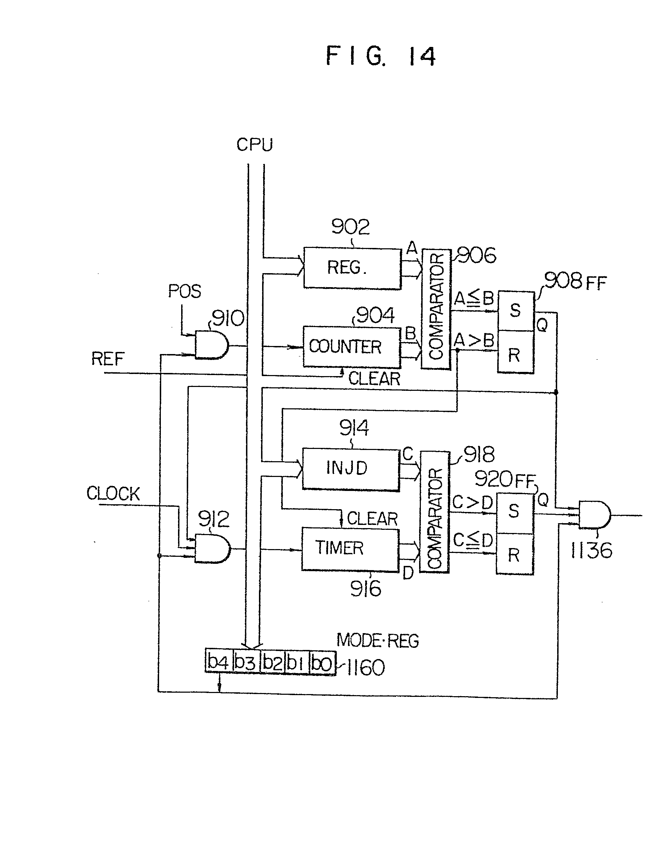

Next, operation of the INJC will be described by referring to Fig. 14 showing an arrangement of the INJC 1134 which is initiated by the signal b4 of logic "1" produced from a mode register 1160 in response to the command from CPU. Numerical value representing in terms of the crank angle the span between the top dead point TDC of engine cylinder and the reference signal REF generated at a predetermined angular position of the crank shaft by the crank angle sensor ANGS 146 is read out from ROM and stored in a register 902. The contents of a counter 904 is cleared by the reference signal REF to zero state and then counts pulses of the pulse signal POS generated at every predetermined rotation angle (e.g. of 1°) of the crank shaft. The contents B of the counter 904 is compared with the contents A in the register 902 through a comparator 906. When A > B, the comparator produces a signal for clearing the timer counter 916. In this manner, the timer 916 is cleared simultaneously with the resetting of the counter 904 to zero by the reference signal REF. When the contents in the counter 904 is incremented to the state in which A ≤ B, a signal of logic "1" is applied to a set terminal S of a flip-flop 908, resulting in the Q-output of logic "1" therefrom. An AND gate 912 is enabled by the Q-output of logic "1" to allow the clock signal to be supplied to the timer counter 916 to be counted. A register INJD 914 serves to store therein the calculated value of Ti read out from the RAM. The contents D of the timer 916 is compared with the contents C in the register INJD through a comparator 918. When C > D, a signal of logic "1" is applied to a set terminal S of a flip-flop 920, resulting in the Q-output of logic "1" therefrom. It will be noted that since the Q-output from the flip-flop 920 is logic "1" when the timer 916 is cleared, the Q-output of logic "1" from the flip-flop 908 described above is supplied to the injector 1012 through an AND gate 1136 to thereby initiate the fuel injection and simultaneously the counting of pulses of the clock signal by the timer 916. When the contents D in the inter counter 916 is incremented to the state in which $C \leq D$, the comparator output of logic "1" is applied to the reset terminal R of the flip-flop 920, thereby causing the Q-output therefrom to be logic "0". The output signal from the AND gate 1136 will be then of logic "0" to terminate the fuel injection through the injector 1012. In this manner, the fuel injection through the injector 1012 is controlled in accordance with the value of Ti arithmetically determined through execution of the calculation routine shown in Fig. 10B, whereby the fuel-air ratio is controlled at an optimum value.

As will be appreciated from the foregoing description according to the invention, the voltage signals produced from the pressure gauges such as VCS, ATS, etc. and representing the measured pressure are converted into the corresponding frequency signals, the frequency values of which are used to determine the control data required for the control of the internal combustion engine through a computer. Thus, it is possible to obtain correct control data without being subjected to influences of noises generated from various external noise sources.

WHAT WE CLAIM IS

1.          In an electronic engine control system including a computer for an internal combustion engine, a signal processing apparatus (144 or 154) for obtaining a pressure signal as a control parameter to be used for processing by the computer, said signal processing apparatus including a pressure gauge (58) for detecting a pressure as the control parameter and generating a voltage signal of a voltage magnitude corresponding to said pressure, and a V-F conversion circuit (60, 61, 62 or 78, 80, 82, 84, 86) for converting said voltage signal into a frequency signal having a frequency corresponding to said voltage magnitude.

2.          A signal processing apparatus according to claim 1, wherein said control parameter is the atmospheric pressure, and said pressure gauge is constituted by an absolute pressure type semiconductor pressure gauge incorporating a bridge connection of semiconductor gauge elements (1, 2, 3 and 4).

3.          A signal processing apparatus according to claim 1, wherein said control parameter is a pressure prevailing in a manifold of said engine, and said pressure gauge is constituted by a relative pressure type semiconductor pressure gauge incorporating a bridge connection of semiconductor gauge elements (1, 2, 3 and 4).

4.          A signal processing apparatus according to claim 1 or 2, wherein said V-F conversion circuit comprises a series connection of a differential integrator circuit (60) and a voltage-frequency converter (61), and a feedback circuit including a frequency-voltage converter (62), said differential integrator circuit has one terminal supplied with a voltage output from said pressure gauge and the other terminal supplied with an output signal from said voltage-frequency converter through said feedback circuit.

5.      A signal processing apparatus according to claim 1 or 2, wherein said V-F conversion circuit comprises an analog switch (78) for receiving a voltage output from said pressure gauge and producing an output signal with a polarity corresponding to an applied control signal, an integrator circuit (80) for integrating the output signal from said analog switch, a first comparator (82) for comparing the integrated output from said integrator circuit with a first reference signal to thereby produce an output signal when said integrated output is greater than said first reference signal, a second comparator (84) for comparing said integrated output with a second reference signal to thereby produce an output signal when said integrated output is smaller than said second reference signal, a flip-flop circuit (86) adapted to be set in response to the output signal from said second comparator to thereby produce a set signal and adapted to be reset in response to the output signal from said first comparator to thereby produce said set signal, and a circuit for supplying said set signal from said flip-flop to said analog switch as said control signal.

6.      An electronic engine control system for controlling an internal combustion engine by using a computer, comprising a computer control circuit (108) including a fuel-air ratio control, a pressure gauge (58) for measuring the atmospheric pressure as a control parameter used in said computer control circuit, a voltage-frequency conversion circuit (60, 61, 62 or 78, 80, 81, 82, 84, 86) for converting an output voltage from said pressure gauge into a frequency signal having a frequency which corresponds to said output voltage, A/D converter means (Fig. 9A) for detecting the frequency of said frequency signal to thereby convert said frequency signal into a digital value representing said frequency, and means (Fig. 10B) for correcting by said digital value a calculated intake air quantity arithmetically determined from predetermined parameters including a pressure in a manifold of said engine, in order to determine the intake air quantity as a function of the atmospheric pressure, said intake air quantity being used for determining a control quantity for said fuel-air ratio control.

7.      An electronic engine control system according to claim 6, further including a second pressure gauge for measuring the pressure in the engine manifold, a second voltage-frequency conversion circuit for converting the voltage output from said second pressure gauge into a second frequency signal having a frequency which corresponds

- 4 -

to said voltage, and second A/D converting means for detecting the frequency of said second frequency signal and converting said signal into a digital value representing said frequency, wherein said digital value is used as the pressure value of the engine manifold for arithmetically determining said calculated intake air quantity.

8.     An electronic engine control system according to calim 6, wherein said V-F conversion circuit comprises a series connection of a differential integrator circuit (60) and a voltage-frequency converter (61) and a feedback circuit including a frequency-voltage converter (62), said differential integrator circuit has one terminal supplied with a voltage output from said pressure gauge and the other terminal supplied with the output signal from said voltage-frequency converter through said feedback circuit.

9.     An electronic engine control system according to claim 6, wherein said V-F conversion circuit comprises an analog switch (78) for receiving a voltage output from said pressure gauge and producing an output signal with a polarity corresponding to an applied control signal, an integrator circuit (80) for integrating the output signal from said analog switch, a first comparator (82) for comparing the integrated output from said integrator circuit with a first reference signal to thereby produce an output signal when said integrated output is greater than said first reference signal, a second comparator (84) for comparing said integrated output with a second reference signal to thereby produce an output signal when said integrated output is smaller than said second reference signal, a flip-flop circuit (86) adapted to be set in response to the output signal from said second comparator to thereby produce a set signal and adapted to be reset in response to the output signal from said first comparator to thereby produce said set signal, and a circuit for supplying said set signal from said flip-flop to said analog switch as said control signal.

# FIG. 1

FIG. 2

FIG. 3

GAUGE PATTEN

FIG. 4A

FIG. 4B

FIG. 5

F I G. 6

# FIG. 7

(A) INPUT TO INTEGRATOR

$V_{BO}$

$V_{BO}$

(B) OUTPUT FROM INTEGRATOR

$Vref_1$

$Vg$

$Vref_2$

(C) R INPUT OF FLIP-FLOP

(D) S INPUT OF FLIP-FLOP

$T_1$ $T_2$

(E) Q OUTPUT OF FLIP-FLOP

$t_0$ $t_1$ $t_2$

0017255

# FIG. 8

CPU

CLOCK

WINDOW-WIDTH REGISTER 88

COMPARATOR 90

A ≤ B

FREQUENCY DIVIDER 86

TIMER COUNTER 92

94

97

96

CLEAR 95

Vf (VCS144)

MEASURING COUNTER 80

LATCH REGISTER 82

84

# FIG. 11

CPU

DATA

CABD 802

A

COMPARATER 808

A > B

A ≤ B

812FF

S Q

R

1144

TO SLOW SOLENOID VALVE

CLOCK

816

COUNT

TIMER COUNTER 804

B

CLEAR

CABP 806

B

C

COMPARATER 810

B ≥ C

b3 b2 b1 b0

1160

CPU

# FIG. 9A

ROUTINE FOR DETERMINING
CORRECTION FACTOR $k_P$
FOR ATMOSPHERIC PRESSURE

# FIG. 9B

ROUTINE FOR DETERMINING
ATMOSPHERIC PRESSURE
CORRECTING FACTOR $k_P$
(INTERRUPT)

IS $V_f$ HIGH LEVEL ? — 91

FREQUENCY COUNTER IS INCREMENTED BY 1 ($n = n + 1$) — 92

$n = 0$ ? — 93

CALCULATING $k_P$ FROM $\underline{n}$ IN FREQUENCY COUNTER AND STORING OF CALCULATED $k_P$ — 94

FREQUENCY COUNTER IS RESET ($n = 0$) — 95

— 96

IRQ

FREQUENCY COUNTER $n$ IS LOADED

CALCULATING AND STORING OF $k_P$

RTI

0017255

## FIG. IOA
INPUT DATA FETCHING ROUTINE

▽

FETCHING AND STORING OF ENGINE REVOLUTION NUMBER

↓

FETCHING AND STORING OF MANIFOLD PRESSURE Pm

↓

FETCHING AND STORING OF INTAKE AIR TEMPERATURE Ta

△

## FIG. IOB
FUEL SUPPLY CALCULATING ROUTINE

▽

CHARGING EFFICIENCY ε IS RETRIEVED FROM A MAP OF Pm AND N

↓

CALCULATION OF $Q_{AM}$

$$Q_{AM}=k_P \cdot \frac{Pm}{Ta} \cdot \varepsilon$$

↓

CALCULATION OF $T_P$

$$T_P = k \cdot \frac{Q_{AM}}{N}$$

↓

CALCULATION OF $T_i$

$$T_i = \alpha T_P (1+\Sigma K)$$

↓

ON-DUTY CORRESPONDING TO CALCULATED $T_i$ IS RETRIEVED FROM A MAP

△

0017255

# FIG. 12

F I G. 13

**F I G.  14**